# EUROPEAN PATENT APPLICATION

(11) **EP 1 363 293 A1**
(43) Date of publication of application: **19.11.2003**
(21) Application number: 02700709.5
(22) Date of filing: 22.02.2002
(51) Int. Cl.: H01B 1/06

(54) **IONICALLY CONDUCTING SHEET**

(30) Priority: 23.02.2001 JP 2001048696; 27.06.2001 JP 2001195034
(71) Applicant: Nippon Oil Corporation, Tokyo 105-8412 (JP)
(72) Inventor: MINAMI, Masaki, NIPPON MITSUBISHI OIL CO., Yokohama-shi, Kanagawa 231-0815 (JP); TANIMOTO, Junichiro, NIPPON MITSUBISHI OIL CO., Yokohama-shi, Kanagawa 231-0815 (JP); KUBO, Takaya, NIPPON MITSUBISHI OIL CO., Yokohama-shi, Kanagawa 231-0815 (JP); NISHIKITANI, Yoshinori, NIPPON MITSUBISHI OIL CO., Yokohama-shi, Kanagawa 231-0815 (JP)
(74) Representative: Grünecker, August, Dipl.-Ing.
(86) International application number: JP0201609
(87) International publication number: WO02067272

(57) **Abstract**

The present invention relates to an ion conductive sheet which comprises (a) a polymeric matrix made of at least one polymer selected from the group consisting of polyether polymers, polyvinylidene fluoride polymers, polyacrylonitrile polymers, and polyacrylate polymers and at least one ion conductive substance selected from the group consisting of (b) supporting electrolytes and solvents, (c) salts meltable at ordinary temperature, and (d) salts meltable at ordinary temperature and solvents.

Although it has been attempted to apply a solid electrolyte such as a polymeric solid electrolyte between a pair of electrodes so as to prevent liquid leakage upon production of electrochemical devices such as primary or secondary batteries, there is a problem that the close adhesion between the electrodes and the solid electrolyte must be improved by some means.

According to the present invention, the problem is solved by using an ion conductive sheet as described above having self-standing properties and at least one embossed surface.

## Description

### [Field of the Invention]

This invention relates to ion conductive sheets, and more particularly to ion conductive sheets which are improved in adhesivity to electrodes.

### [Background of the Invention]

When producing various types of electrochemical devices such as primary or secondary batteries, it has been known that an electrolyte solution containing an organic solvent such as propylene carbonate as the main component is used so as to form an ion conductive layer between the pair of electrodes. However, there are problems that in use of such devices the solution would scatter due to the breakage of the device or would possibly leak.

In order to overcome these defects, it has been proposed to use solid electrolytes such as polymeric solid electrolytes. However, in the case of producing an electrochemical cell using a solid electrolyte, it is necessary to make various improvements in the adhesivity to the electrodes, resulting in a demand to produce electrochemical devices in a simple manner.

In view of the above-described situation, the present invention was made and intended to provide an ion conductive sheet (film-like solid electrolyte) which enables the production of an electrochemical device by a simple method and has an enhanced ion conductivity.

### [Disclosures of the Invention]

After intensive research and efforts made to solve the above-described problems, it has been found that a specific ion conductive sheet can solve the problems.

That is, an ion conductive sheet according to the present invention comprises (a) a polymeric matrix made of at least one polymer selected from the group consisting of polyether polymers, polyvinylidene fluorine polymers, polyacrylonitrile polymers, and polyacrylate polymers and at least one ion conductive substance selected from the group consisting of (b) supporting electrolytes and solvents, (c) salts meltable at ordinary temperature, and (d) salts meltable at ordinary temperature and solvents and has self-standing properties and at least one embossed surface.

In the ion conductive sheet of the present invention, the polymeric matrix is preferably a polyvinylidene fluorine polymer while the ion conductive substance is preferably a solvent containing a supporting electrolyte and a phosphoric acid ester-containing compound, the content of which is preferably from 50 to 100 percent by mass based on the total amount of the solvent.

The present invention will be described in detail below.

The ion conductive sheet of the present invention comprises (a) a polymeric matrix made of a specific polymeric compound and at least one ion conductive substance selected from the group consisting of (b) supporting electrolytes and solvents, (c) salts meltable at ordinary temperature, and (d) salts meltable at ordinary temperature and solvents and has self-standing properties and at least one embossed surface.

In the present invention, at least one ion conductive substance selected from the group consisting of (b) supporting electrolytes and solvents, (c) salts meltable at ordinary temperature, (d) salts meltable at ordinary temperature and solvents, and another optional components is held in (a) a polymeric matrix made of a specific polymeric compound thereby forming an ion conductive sheet in a solid or gel state.

First of all, the polymeric compound used as a polymeric matrix in the present invention is described.

The polyether polymers used in the present invention are those having an alkylene oxide structure in the main chain other than the terminal ends.

The polyether polymers may be obtained by ring-opening polymerization of a compound such as epoxide, oxetane, or tetrahydrofuran. These compounds may have substituents. More specifically, these compounds may be exemplified by polyethylene oxide, polytrimethylene oxide, and polytetrahydrofuran. Examples of the substituents are alkyl, alkenyl, aryl, and aralkyl groups and those having a substituent represented by "RO-" wherein R is a hydrocarbon group.

Alkyl groups may be those having 1 to 20, preferably 1 to 12 carbon atoms. Specific examples of alkyl groups are methyl, ethyl, propyl, n-butyl, s-butyl, pentyl, hexyl, heptyl, octyl, nonyl, decyl, undecyl, and dodecyl groups.

Alkenyl groups may be those having 2 to 10, preferably 2 to 6 carbon atoms. Specific examples of alkenyl groups are vinyl, propenyl, butenyl, pentenyl, and hexenyl groups.

Aryl groups may be those having 6 to 30, preferably 6 to 12 carbon atoms. Specific examples of aryl groups are phenyl, tolyl, p-ethylphenyl, and o-ethylphenyl groups.

Aralkyl groups may be those having 7 to 30, preferably 7 to 20 carbon atoms. Specific examples of aralkyl groups are benzyl, phenetyl,. and trityl groups.

Specific examples of the above-exemplified groups having a substituent represented by "RO-" wherein R is a hydrocarbon group, preferably an alkyl group having 1 to 10 carbon atoms are methoxymethyl, 2-methoxyethoxymethyl, 2-methoxyethoxyethyl, p-methoxyphenyl, p-butoxyphenyl, p-methoxyphenylmethyl, and p-methoxystyryl groups.

The groups having a substituent represented by "RO-" may be those which are further polymerized and exemplified by groups represented by formulas (1) to (8) given below:

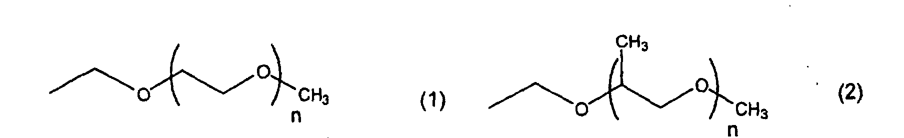

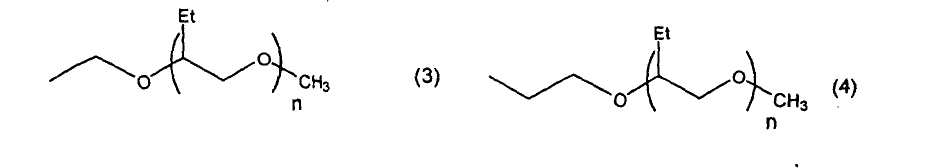

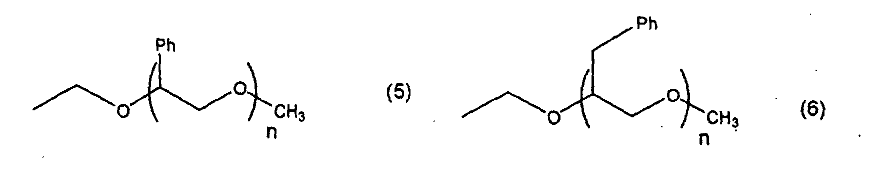

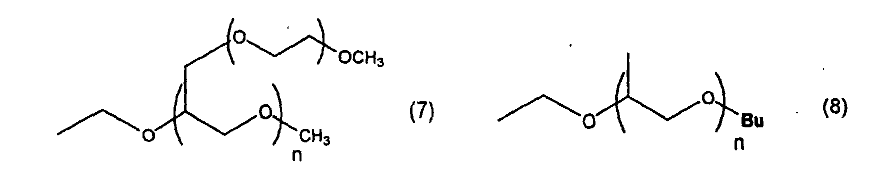

In the above formulas (1) to (8), n is an integer of 1 or greater, preferably 1 to 1,000, more preferably 1 to 200, and particularly preferably 2 to 100.

Specific examples of polyether polymer having these substituents are as follows:

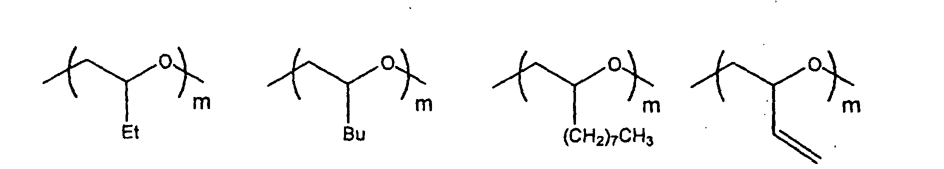

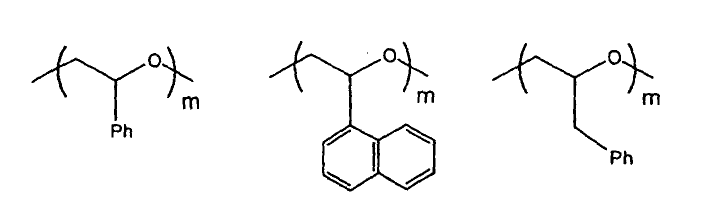

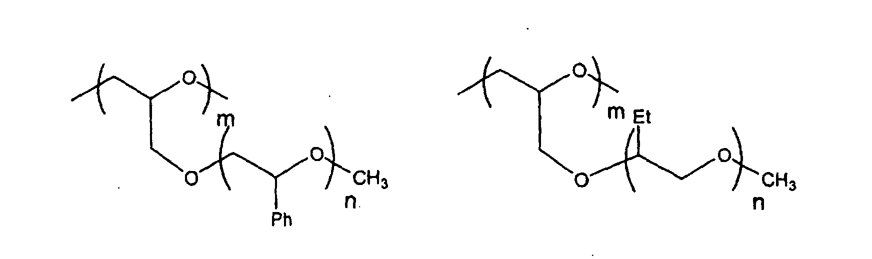

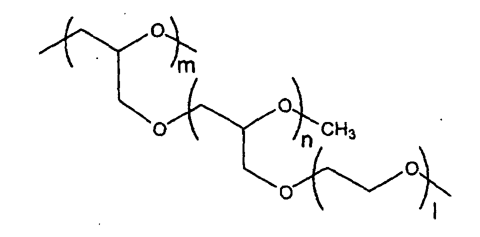

In the above formulas, l and n each are an integer of 1 or greater, preferably from 1 to 1,000, more preferably from 1 to 200, and particularly preferably from 3 to 100, while m is an integer of from 20 to 100,000, preferably from 20 to 50,000, and more preferably from 50 to 20,000. Thorough this specification, "Et" indicates an ethyl group, "Bu" indicates a butyl group, and "Ph" indicates a phenyl group.

The polyether polymers are not limited to homopolymers having the above repeating units and thus may be copolymers. In such a case, the copolymers may be either random- or block-copolymers.

Examples of the polyether polymers comprising copolymers are given below. No particular limitation is imposed on the composition ratio of the copolymers. Therefore, it may be selected arbitrary.

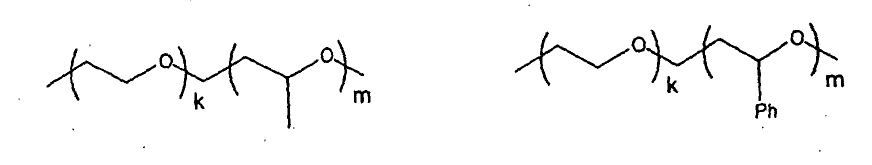

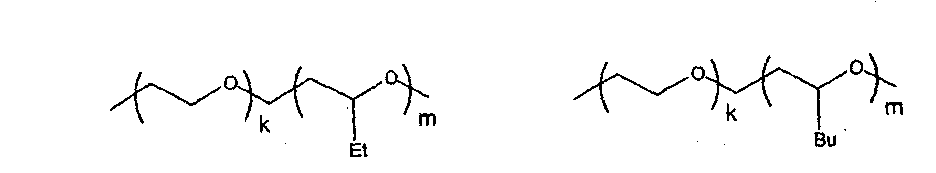

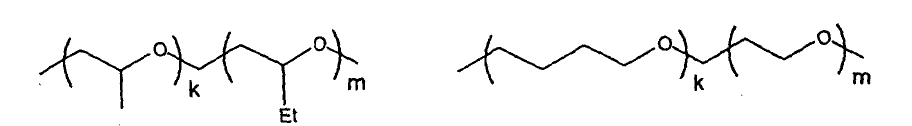

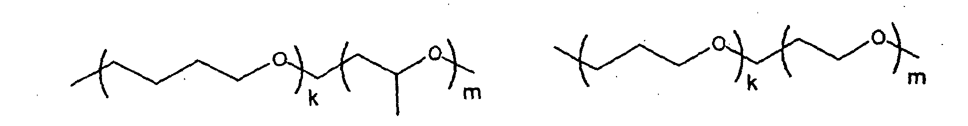

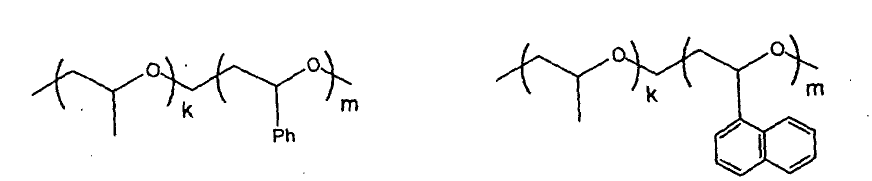

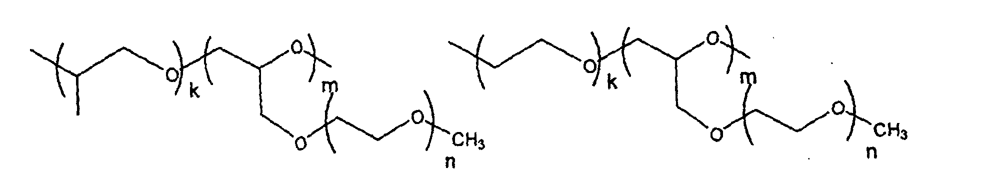

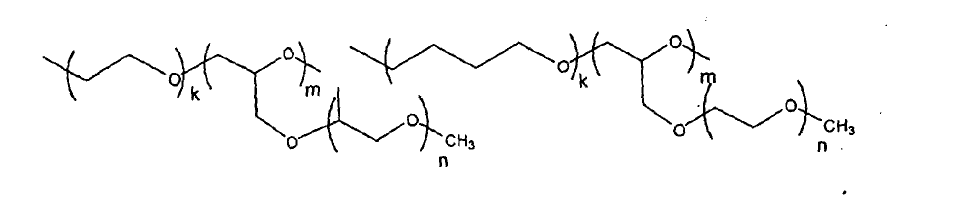

In the above formulas, n is an integer of 1 or greater, preferably from 1 to 1,000, more preferably from 1 to 200, and particularly preferably from 3 to 100, while k and m each are an integer of from 20 to 100,000, preferably from 20 to 50,000, and more preferably from 50 to 20,000.

The terminal ends of the above copolymers are generally hydroxyl, alkyl, or aryl groups. Alkyl groups may be those having 1 to 10 carbon atoms, such as methyl, ethyl, propyl, n-butyl, n-pentyl, and n-octyl. Aryl groups may be those having 6 to 20 carbon atoms, such as phenyl and naphthyl groups.

No particular limitation is imposed on the molecular weight of the above-described polymers. However, they are required not to be in a liquid state at room temperature. The molecular weight is usually 1,000 or greater, preferably 5,000 or greater. Although no particular limitation is imposed on the upper limit of the molecular weight, it is selected from such an extent to exhibit properties such as solubility or meltability and thus is 10,000,000 or less, preferably 5,000,000 or less. The molecular weight used herein denotes a number-average molecular weight measured with a chromatography (size exclusion chromatography). Hereinafter, in this specification, the molecular weight of a polymer denotes a number-average molecular weight unless stated otherwise.

Although no particular limitation is imposed on the polyvinylidene fluoride polymers used in the present invention, they are exemplified by homopolymers of vinylidene fluoride or copolymers of vinylidene fluoride with another polymeric monomer, preferably a radical polymeric monomer. Specific examples of the polymeric monomer to be copolymerized with vinylidene fluoride are hexafluoropropylene, tetrafluoroethylene, trifluoroethylene, ethylene, propylene, acrylonitrile, vinylidene chloride, methylacrylate, ethylacrylate, methylmethacrylate, and styrene.

These copolymeric monomers may be used in an amount of from 1 to 100 parts by weight, preferably 5 to 80 parts by weight, based on 100 parts by weight of vinylidene fluoride.

Preferred copolymeric monomer is hexafluoropropylene and particularly preferred is a vinylidene fluoride-hexafluoropropylene copolymer obtained by copolymerizing 1 to 25 percent by mol of hexafluoropropylene with vinylidene fluoride. Alternatively, there may be used a mixture of two or more vinylidene fluoride-hexafluoropropylene copolymers whose copolymerization ratios are different from each other.

Further alternatively, two or more of the above-described copolymeric monomers may be copolymerized with vinylidene fluoride. For example, there may be used a copolymer obtained by copolymerizing a combination of such as vinylidene fluoride, hexafluoropropylene, and tetrafluoroethylene; vinylidene fluoride, tetrafluoroethylene, and ethylene; or vinylidene fluoride, tetrafluoroethylene, and propylene.

Although no particular limitation is imposed on the number-average molecular weight of the polyvinylidene fluoride polymer, the lower limit is usually 5,000 or greater., preferably 10,000 or greater, and more preferably 20,000 or greater, while the upper limit is usually 10,000,000 or lower, preferably 2,000,000 or lower, and more preferably 1,000,000 or lower.

No particular limitation is imposed on the polyacrylonitrile polymer used in the present invention. Examples of the polyacrylonitrile polymer are homocopolymers of acrylonitrile or copolymers of acrylonitrile with another polymeric monomer, preferably a radical polymeric monomer. Examples of the polymeric monomer (copolymeric monomer) to be copolymerized with acrylonitrile are propylene, vinylidene chloride, methylacrylate, ethylacrylate, methylmethacrylate, and styrene.

These copolymeric monomers may be used in an amount of from 1 to 100 parts by weight, preferably 5 to 80 parts by weight, based on 100 parts by weight of acrylonitrile. Two or more of these copolymeric monomers may be added.

The average-molecular weight of the polyacrylonitrile polymer is within the range of 10,000 to 10,000,000, preferably 100,000 to 2,000,000, and more preferably 100,000 to 1,000,000.

Although not restricted, the polyacrylate polymer used in the present invention is exemplified by acrylates and methacrylates. Examples of the acrylates are those whose monomer is alkyl group, such as methylacrylate, ethylacrylate, and propylacrylate; benzylacrylate; and phenylacrylate. Furthermore, the acrylates may be those having an ethylene glycol unit. Specific examples are methoxyethylacrylate, diethylene glycol methyletheracrylate, triethylene glycol methyletheracrylate, tetraethylene glycol methyletheracrylate, triethylene glycol ethyletheracrylate, triethylene glycol propyletheracrylate, and triethylene glycol phenyletheracrylate.

Examples of the methacrylates are those having an alkyl group, such as methylmethacrylate, ethylmethacrylate, and propylmethacrylate; benzylmethacrylate; and phenylmethacrylate. Furthermore, the methacrylates may be those having an ethylene glycol unit. Specific examples are methoxyethylmethacrylate, diethylene glycol methylethermethacrylate, triethylene glycol methylethermethacrylate, tetraethylene glycol methylethermethacrylate, triethylene glycol ethylethermethacrylate, triethylene glycol propylethermethacrylate, and triethylene glycol phenylethermethacrylate.

These monomers are homopolymerized or suitably radical-polymerized thereby forming polymers. The composition of the copolymers may be arbitrary selected. The number-average molecular weight of the polyacrylate polymer is within the range of 10,000 to 10,000,000, preferably 100,000 to 2,000,000, and more preferably 100,000 to 1,000,000.

In the present invention, one or more of the above-described polymers may be used in combination.

Next, the ion conductive substance will be described.

The ion conductive substance used in the present invention is at least one ion conductive substance selected from the group consisting of (b) supporting electrolytes and solvents, (c) salts meltable at ordinary temperature, and (d) salts meltable at ordinary temperature and solvents.

Supporting electrolytes used in the present invention are salts, acids, and alkalis which are normally used in the field of electrochemistry or batteries.

Salts may be inorganic ion salts such as alkali metal salts and alkaline earth metal salts, quaternary ammonium salts, cyclic quaternary ammonium salts, and phosphonium quaternary salts. Particularly preferred are Li salts.

Specific examples of such salts are Li, Na, and K salts having a counter anion selected from halogen ions, SCN⁻, ClO₄⁻, BF₄⁻, (CF₃SO₂)₂N⁻, (C₂F₅SO₂)₂N⁻, PF₆⁻, AsF₆⁻, CH₃COO⁻, CH₃(C₆H₄)SO₃⁻, and (C₂F₅SO₂)₃C⁻.

The salts may also be quaternary ammonium salts having a counter anion selected from halogen ions, SCN⁻, ClO₄⁻, BF₄⁻, (CF₃SO₂)₂N⁻, (C₂F₅SO₂)₂N⁻, PF₆⁻, AsF₆⁻, CH₃COO⁻, CH₃(C₆H₄)SO₃⁻, and (C₂F₅SO₂)₃C⁻, and are specifically (CH₃)₄NBF₄, (C₂H₅)₄NBF₄, (n-C₄H₉)₄NBF₄, (C₂H₅)₄NBr, (C₂H₅ )₄NClO₄, (n-C₄H₉)₄NClO₄, CH₃(C₂H₅)₃NBF₄, (CH₃)₂(C₂H₅)₂NBF₄, and salts represented by the following formulas:

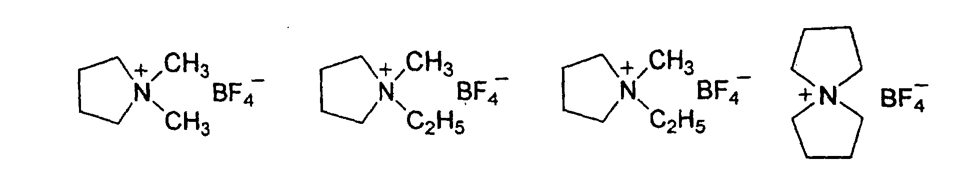

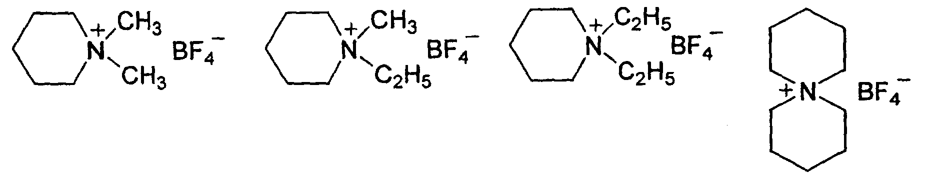

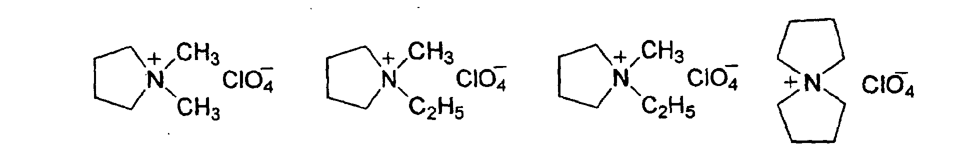

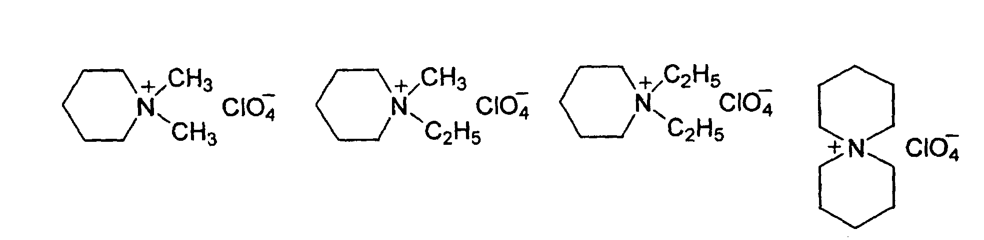

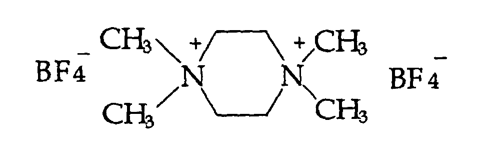

The salts may also be phosphonium salts having a counter anion selected from halogen ions, SCN⁻, ClO₄⁻, BF₄⁻, (CF₃SO₂)₂N⁻, (C₂F₅SO₂)₂N⁻, PF₆⁻, AsF₆⁻, CH₃COO⁻, CH₃(C₆H₄)SO₃⁻, and (C₂F₅SO₂)₃C⁻, and are specifically (CH₃)₄PBF₄, (C₂H₅)₄PBF₄, (C₃H₇)₄PBF₄, and (C₄H₉)₄PBF₄.

There may be used mixtures of these salts.

No particular limitation is imposed on acids. Eligible acids are inorganic acids and organic acids, and more specifically sulfuric acid, hydrochloric acid, phosphoric acids, sulfonic acids, and carboxylic acids.

No particular limitation is imposed on alkalis. Eligible alkalis are sodium hydroxide, potassium hydroxide, and lithium hydroxide.

The amount of the supporting electrolyte in a solvent is arbitrary selected. The upper limit amount of the supporting electrolyte is 20 M or less, preferably 10 M or less, and more preferably 5 M or less, while the lower limit is 0.01 M or greater, preferably 0.05 M or greater, and more preferably 0.1 M or greater.

The upper limit content of the supporting electrolyte in the ion conductive sheet is 20 percent by mass or less, preferably 10 percent by mass or less, while the lower limit is 0.01 percent by mass or greater, preferably 0.1 percent by mass or greater.

Next, the solvent used in the present invention will be described.

Eligible solvents for components (b) and (c) are generally any type of solvents as long as they are used in electrochemical cell or batteries. Specific examples of such solvents are water, acetic anhydride, methanol, ethanol, tetrahydrofuran, propylene carbonate, nitromethane, acetonitrile, dimethylformamide, dimethylsulfoxide, hexamethylphosamide, ethylene carbonate, dimethoxyethane, γ-butyrolactone, γ-valerolactone, sulforan, dimethoxyethane, propionnitrile, glutaronitrile, adiponitrile, methoxyacetonitrile, dimethylacetoamide, methylpyrrolidinone, dimethylsulfoxide, dioxolane, phosphoric acid ester compounds, and polyethylene glycol. Particularly preferred are phosphoric acid ester compounds, propylene carbonate, ethylene carbonate, dimethylsulfoxide, dimethoxyethane, acetonitrile, γ-butyrolactone, sulforan, dioxolane, dimethylformamide, dimethoxyethane, tetrahydrofuran, adiponitrile, methoxyacetonitrile, dimethylacetoamide, methylpyrrolidinone, dimethylsulfoxide, and polyethylene glycol. The solvent may be used singlely or in combination.

Preferred phosphoric acid ester compounds used in the present invention are those exhibiting liquidity at room temperature.

Even though a phosphoric acid ester compound is solid at room temperature, it can be used if it is mixed with a compound represented by the formula

PO(OR)₃ (a).

In this case, no particular limitation is imposed on the mixing ratio of such a phosphoric acid ester compound and a compound of formula (a). However, 100 parts by mass or less of the solid phosphoric acid ester is mixed with 100 parts by mass of a compound of formula (a).

In formula (a), the groups represented by R each are a hydrocarbon or halogen-substituted hydrocarbon group having 1 to 20, preferably 1 to 10, and more preferably 2 to 8 carbon atoms and may be the same or different from each other. Preferred hydrocarbon groups are alkyl and aryl groups, particularly preferred are alkyl groups. Examples of alkyl groups are methyl, ethyl, propyl, butyl, pentyl, hexyl, heptyl, and octyl groups. Preferred halogen is fluorine. Preferred halogen-substituted hydrocarbons are halogenated alkyl groups, while particularly preferred are fluorinated alkyl groups. Examples of aryl groups are phenyl and xylyl groups..

Specific examples of the phosphoric acid ester compound are trimethyl phosphate, triethyl phosphate, tripropyl phosphate, ethyldimethyl phosphate, tributyl phosphate, tripentyl phosphate, trihexyl phosphate, triheptyl phosphate, trioctyl phosphate, trinonyl phosphate, tridecyl phosphate, tris(trifluoromethyl) phosphate, tris(pentafluoroethyl) phosphate, and triphenyl phosphate. Particularly preferred are triethyl phosphate and trimethyl phosphate. Two or more of these compounds may be used in combination.

In the present invention, in the case of using the polyvinylidene fluoride polymer as the polymeric matrix and the above-described supporting electrolyte and a solvent containing the phosphoric acid ester compound as the ion conductive substance, an ion conductive sheet which is capable of using for various purposes can be obtained because of its enhanced ion conductivity and excellent fire retardancy.

No particular limitation is imposed on the ratio of the phosphoric acid ester contained in the solvent. However, the compound is contained in an amount of preferably 50 percent by mass or more, more preferably 70 percent by mass or more, and further more preferably 90 percent by mass or more, based on the total mass of the solvent. Alternatively, 100 percent by mass of the compound, i.e., only the compound may be contained in the solvent.

An increase in the amount of the phosphoric acid ester compound in the solvent can improve the fire retardancy or transparency of the solid electrolyte. Solvents which can contain the phosphoric acid ester compound are those other than the above-described phosphoric acid ester compounds.

No particular limitation is imposed on the amount of the solvent. However, it may be contained in an amount of 20 percent by mass or more, preferably 30 percent by mass or more and 98 percent by mass or less, preferably 80 percent by mass or less, and more preferably 70 percent by mass or less, in the ion conductive sheet. Needless to mention, the solvent may be contained in an amount of 50 percent by mass or more depending on the type of the solvent.

The salts meltable at ordinary temperature will be described below.

The ordinary temperature meltable salts used as component (c) and (d) in the present invention are solvent-free salts comprising only an ion pair and melting at ordinary temperature i.e. a liquid state and are usually those comprising an ion pair whose melting point is 20 °C or lower and which are liquid at a temperature exceeding 20 °C.

The ordinary temperature meltable salts may be used alone or in combination.

Examples of the ordinary temperature meltable salts are those represented by the following formulas: 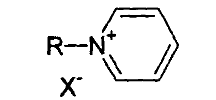 wherein R is an alkyl group having 2 to 20, preferably 2 to 10 carbon atoms and X⁻ is a counter anion selected from halogen ions, SCN⁻, ClO₄⁻, BF₄⁻, (CF₃SO₂)₂N⁻, (C₂F₅SO₂)₂N⁻, PF₆⁻, AsF₆⁻, CH₃COO⁻, CH₃(C₆H₄)SO₃⁻, and (C₂F₅SO₂)₃C⁻; 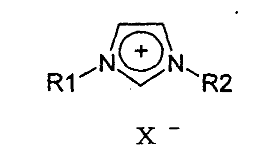 wherein R1 and R2 are each independently an alkyl group having 1 to 10 carbon atoms, preferably methyl and ethyl groups and an aralkyl group having 7 to 20, preferably 7 to 13 carbon atoms, preferably benzyl and may be the same or different from each other and X⁻ is a counter anion selected from halogen ions, SCN⁻, ClO₄⁻, BF₄⁻, (CF₃SO₂)₂N⁻, (C₂F₅SO₂)₂N⁻, PF₆⁻, AsF₆⁻, CH₃COO⁻, CH₃(C₆H₄)SO₃⁻, (C₂F₅SO₂)₃C⁻, and F(HF)_{2.3}⁻; and 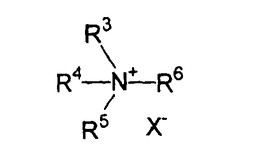 wherein R³, R⁴, R⁵, and R⁶ are each independently an alkyl group having one or more, preferably 1 to 6 carbon atoms, an aryl group having 6 to 12 carbon atoms, such as phenyl, and a methoxymethyl group and may be the same or different and X⁻ is a counter anion selected from halogen ions, SCN⁻, ClO₄⁻, BF₄⁻, (CF₃SO₂)₂N⁻, (C₂F₅SO₂)₂N⁻, PF₆⁻, AsF₆⁻, CH₃COO⁻, CH₃(C₆H₄)SO₃⁻, (C₂F₅SO₂)₃C⁻, and F(HF)_{2.3}⁻.

No particular limitation is imposed on the amount of the ordinary temperature meltable salt. However, the salt is contained in an amount of 0.1 percent by mass or more, preferably 1 percent by mass or more, and more preferably 10 percent by mass or more and 70 percent by mass or less, preferably 60 percent by mass or less, and more preferably 50 percent by mass or less.

The ion conductive sheet of the present. invention may contain another optional components. Examples of such optional components are ultraviolet absorbing agents. No particular limitation is imposed on eligible ultraviolet absorbing agents. However, typical examples are organic ultraviolet absorbing agents such as benzotriazole- or benzophenone-based compounds.

Examples of benzotriazole-based compounds are those represented by the formula 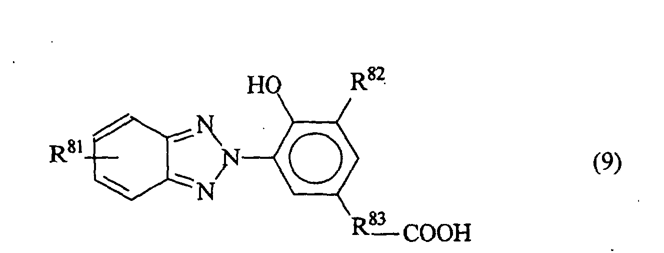 In formula (9), R⁸¹ is hydrogen, halogen or an alkyl group having 1 to 10, preferably 1 to 6 carbon atoms. Specific examples of halogen are fluorine, chlorine, bromine and iodine. Specific examples of the alkyl group are methyl, ethyl, propyl, i-propyl, butyl, t-butyl and cyclohexyl groups. R⁸¹ is usually substituted at the 4- or 5-position of the benzotriazole ring but the halogen atom and the alkyl group are usually located at the 4-position. R⁸² is hydrogen or an alkyl group having 1 to 10, preferably 1 to 6 carbon atoms. Examples of the alkyl group are methyl, ethyl, propyl, i-propyl, butyl, t-butyl, and cyclohexyl groups. R⁸³ is an alkylene or alkylidene having 1 to 10, preferably 1 to 3 carbon atoms. Examples of the alkylene group are methylene, ethylene, trimethylene, and propylene groups. Examples of the alkylidene are ethylidene and propylidene groups.

Specific examples of the compounds represented by formula (9) are 3-(5-chloro-2H-benzotriazole-2-yl)-5-(1,1-dimethylethyl)-4-hydroxy-benzene propanoic acid, 3-(2H-benzotriazole-2-yl)-5-(1,1-dimethylethyl) -4-hydroxy-benzene ethanoic acid, 3-(2H-benzotriazole-2-yl)-4-hydroxybenzene ethanoic acid, 3-(5-methyl-2H-benzotriazole-2-yl)-5-(1-methylethyl)-4-hydroxybenzene propanoic acid, 2-(2'-hydroxy-5'-methylphenyl)benzotriazole, 2-(2'-hydroxy-3',5'-bis(α,α-dimethylbenzyl) phenyl)benzotriazole, 2-(2'-hydroxy-3',5'-di-t-butylphenyl) benzotriazole, 2-(2'-hydroxy-3'-t-butyl-5'-methylphenyl)-5-chlorobenzotriazole, and 3-(5-chloro-2H-benzotriazole-2-yl)-5-(1,1-dimethylethyl)-4-hydroxy-benzene propanoic acid octyl ester.

Examples of benzophenon-based compounds are those represented by the following formula

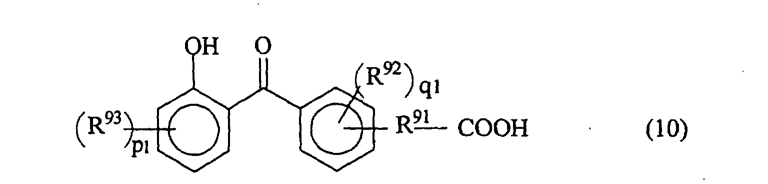

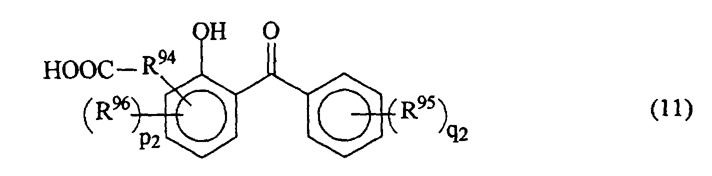

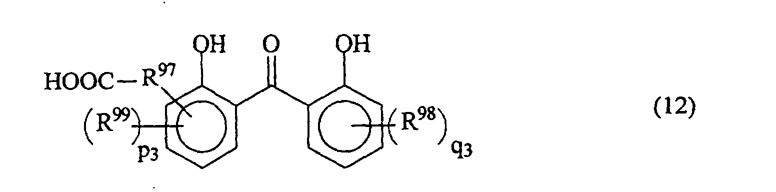

In formulas (10), (11), and (12), R⁹², R⁹³, R⁹⁵, R⁹⁶, R⁹⁸, and R⁹⁹ may be the same or different from each other and are each independently a hydroxyl group or an alkyl or alkoxy group having 1 to 10, preferably 1 to 6 carbon atoms. Specific examples of the alkyl group are methyl, ethyl, propyl, i-propyl, butyl, t-butyl, and cyclohexyl groups. Specific examples of the alkoxy group are methoxy, ethoxy, propoxy, i-propoxy, and butoxy groups.

R⁹¹, R⁹⁴, and R⁹⁷ are each independently an alkylene or alkylidene having 1 to 10, preferably 1 to 3 carbon atoms. Examples of the alkylene group are methylene, ethylene, trimethylene, and propylene groups. Examples of the alkylidene are ethylidene and propylidene groups.

p1, p2, p3, q1, q2, and q3 are each independently an integer of from 0 to 3.

Specific examples of the benzophenone-based compounds represented by formulas (10) to (12) are 2-hydroxy-4-methoxybenzophenone-5-carboxylic acid, 2,2'-dihydroxy-4-methoxybenzophenone-5-carboxylic acid, 4-(2-hydroxybenzoyl)-3-hydroxybenzene propanoic acid, 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2,2'-dihydroxy-4,4'-dimethoxybenzophenone, 2,2',4,4'-tetrahydroxybenzophenone, and 2-hydroxy-4-methoxy-2'-carboxybenzophenone.

These compounds may be used in combination.

The use of the ultraviolet absorbing agent is optional. No particular limitation is imposed on the amount of the ultraviolet absorbing agent. If the agent is used, it is contained in an amount of 0.1 percent by mass or more, preferably 1 percent by mass or more and 20 percent by mass or less, preferably 10 percent by mass or less, in the ion conductive sheet.

Next, the method of producing the ion conductive sheet of the present invention will be described.

The ion conductive sheet of the present invention is easily produced by forming a mixture obtained by blending the above-described ion conductive substance and if necessary optional components in the polymeric matrix, into a sheet by any known method. No particular limitation is imposed on such a method. Therefore, there may be employed extrusion or casting wherein the sheet is obtained in the form of a film.

Extrusion may be conducted in a conventional manner wherein the polymeric matrix and the electrolyte solution are mixed and heat-melted, followed by film-forming. Casting may be conducted by mixing the polymeric matrix and the electrolyte and adjusting the viscosity of the mixture with an appropriate diluent, followed by coating the mixture with a coater which is normally used in casting and drying the coated mixture thereby forming a film. The coater can be selected depending on the viscosity and film thickness from doctor coaters, blade coaters, rod coaters, knife coaters, reverse-roll coaters, gravure coaters, and spray coaters.

The ion conductive sheet has an ion conductivity of usually 1 x 10⁻⁷ S/cm or greater, preferably 1 x 10⁻⁶ S/cm or greater, and more preferably 1 x 10⁻⁵ S/cm or greater, at room temperature. The ion conductivity can be measured by a conventional method such as complex impedance method.

Since the thickness of the ion conductive sheet may be selected depending on the usage, no particular limitation is imposed on the thickness as long as it is within such a range that embossing hereinafter described can be applied. The lower limit thickness is usually 1 µm or greater, preferably 10 µm or greater, while the upper limit is 3 mm or less, preferably 1 mm or less.

The ion conductive sheet of the present invention is characterized in that one or both surfaces thereof are embossed.

The term "embossing" used herein denotes the formation of recesses and projections in the sheet surface and is a method for making uniform embossed patterns randomly on the sheet surface.

No particular limitation is imposed on the shape of embossing pattern to be formed in the ion conductive sheet. However, the amplitude of recesses and projection is preferably 100 µm or smaller, more preferably 50 µm or smaller, and further more preferably 20 µm or smaller.

No particular limitation is imposed on the embossing method. Therefore, various methods can be employed. Specifically, there may be employed a method in which an embossed pattern is heat-transferred to the sheet surface using emboss rolls having a patterned surface. No particular limitation is imposed on the embossed pattern in the sheet surface. The embossed pattern may be stain finish, wood finish, or sand blast finish resembling ground glass. Preferred are stain finish and sand blast finish.

Embossing may be applied to one or both surfaces of the ion conductive sheet.

The embossed pattern was measured with DEKTACK 3030 wherein a feeler is swept at a contact pressure of 3mg. In the case where there is a risk of the deformation of the embossed pattern due to the contact of the feeler, it is also possible to evaluate the embossed pattern by a measurement using an optical means without contacting the sheet surface.

The ion conductive sheet of the present invention has self-standing properties. That is, the ion conductive sheet has a tensile modulus at 25 °C of 5 x 10⁴N/m² or greater, preferably 1 x 10⁵N/m² or greater, and most preferably 5 x 10⁵N/m² or greater. The measurement of such a tensile modulus was conducted on a strip-like sample with a size of 2cm x 5cm using a conventional tensile modulus tester.

### [Applicability in the Industry]

The ion conductive sheet of the present invention can be used together with the electrolytes of electrochemical devices such as various all-solid type secondary batteries, wet type solar batteries, electric double layer capacitors, electrolytic condensers, and electrochromic devices and is improved particularly in adhesivity to electrodes. Furthermore, the use of the ion conductive sheet enables the production of an electrochemical device with higher performances due to its high ion conductivity, mechanical strength, and stability with time. For example, the ion conductive sheet may be used suitably as electrolytes for thin type secondary batteries and high-energy batteries. Furthermore, even in the case of using the ion conductive sheet of the present invention in electrochemical devices, it is free from liquid leakage.

### [Best Mode for Carrying out the Invention]

The present invention will be described herein below in detail with reference to the following examples but are not limited thereto.

### Example 1

A homogeneous solution was obtained by mixing 4 g of polyethylene oxide (number average molecular weight: 1,000,000) and 2 g of propylene carbonate, adding thereto 200 mg of a lithium salt (1 mol/L), and diluting the mixture with acetonitrile, followed by heating. The resulting solution was coated over a polytetrafluoroethylene substrate by a doctor blade method and dried by heating thereby obtaining a uniform ion conductive sheet with a thickness of 100 µm. The sheet was allowed to pass through a pair of heated embossing rolls so as to form on both surfaces embossed patterns of projections and recesses with an average width of 5 µm. It was found that this sheet was easily peelable from the polytetrafluoroethylene substrate and handled and confirmed that it had a tensile modulus of 1.5 x 10⁶N/m² and self-standing properties.

In order to evaluate the adhesivity of the sheet to an electrode, the sheet was sandwiched between a pair of transparent electrically conductive substrates (glasses with an electrode having an ITO layer) and pressed. It was then confirmed that no bubbles was formed between the ion conductive sheet and each of the ITO electrode layers and the sheet exhibited an excellent adhesivity to the electrodes.

The ITO substrates were used as electrodes and the ion conductivity was measured by a complex impedance method and found to be 3 x 10⁻⁴ S/cm which is excellent.

### Example 2

A homogeneous solution was obtained by mixing 4 g of a copolymer of ethylene oxide and propylene oxide having at the branched chain polyethylene oxide, manufactured by DAISO Co., Ltd. under the trade name of P(EO/EM) (number average molecular weight: 2,000,000) and 1 g of propylene carbonate, adding thereto 200 mg of a lithium salt (1 mol/L), and diluting the mixture with acetonitrile, followed by heating. The resulting solution was coated over a polytetrafluoroethylene substrate by a doctor blade method and dried by heating thereby obtaining a uniform ion conductive sheet with a thickness of 100 µm. The sheet was allowed to pass through a pair of heated embossing rolls so as to form on both surfaces embossed patterns of projections and recesses with an average width of 5 µm. It was found that this sheet was easily peelable from the polytetrafluoroethylene substrate and handled and confirmed that it had a tensile modulus of 1 x 10⁶N/m² and self-standing properties.

In order to evaluate the adhesivity of the sheet to an electrode, the sheet was sandwiched between a pair of transparent electrically conductive substrates (glasses with an electrode having an ITO layer) and pressed. It was then confirmed that no bubbles was formed between the ion conductive sheet and each of the ITO electrode layers and the sheet exhibited an excellent adhesivity to the electrodes.

The ITO substrates were used as electrodes and the ion conductivity was measured by a complex impedance method and found to be 5 x 10⁻⁴S/cm which is excellent.

### Example 3

A homogeneous solution was obtained by adding 2 g of polyvinylidene fluoride to 5 g of a propylene carbonate solution containing 1 mol/L of LiClO₄ and diluting the mixture with acetone, followed by heating. The resulting solution was coated over a polytetrafluoroethylene substrate by a doctor blade method and dried by heating thereby obtaining a uniform ion conductive sheet with a thickness of 100 µm. The sheet was allowed to pass through a pair of heated embossing rolls so as to form on both surfaces embossed patterns of projections and recesses with an average width of 5 µm. It was found that this sheet was easily peelable from the polytetrafluoroethylene substrate and handled and confirmed that it had a tensile modulus of 5 x 10⁶N/m² and self-standing properties.

In order to evaluate the adhesivity of the sheet to an electrode, the sheet was sandwiched between a pair of transparent electrically conductive substrates (glasses with an electrode having an ITO layer) and pressed. It was then confirmed that no bubbles was formed between the ion conductive sheet and each of the ITO electrode layers and the sheet exhibited an excellent adhesivity to the electrodes.

The ITO substrates were used as electrodes and the ion conductivity was measured by a complex impedance method and found to be 3 x 10⁻⁴S/cm which is excellent.

### Example 4

A homogeneous solution was obtained by adding 2 g of poly(vinylidene fluoride-hexafluoropropylene) manufactured by ATOFINA · JAPAN Ltd. under the trade name of KYNAR2751 to 5 g of a propylene carbonate solution of 1 mol/L of LiBF₄ and diluting the mixture with acetone, followed by heating. The resulting solution was coated over a polytetrafluoroethylene substrate by a doctor blade method and dried by heating thereby obtaining a uniform ion conductive sheet with a thickness of 100 µm. The sheet was allowed to pass through a pair of heated embossing rolls so as to form on both surfaces embossed patterns of projections and recesses with an average width of 5 µm. It was found that this sheet was easily peelable from the polytetrafluoroethylene substrate and handled and confirmed that it had a tensile modulus of 3 x 10⁶N/m² and self-standing properties.

In order to evaluate the adhesivity of the sheet to an electrode, the sheet was sandwiched between a pair of transparent electrically conductive substrates (glasses with an electrode having an ITO layer) and pressed. It was then confirmed that no bubbles was formed between the ion conductive sheet and each of the ITO electrode layers and the sheet exhibited an excellent adhesivity to the electrodes.

The ITO substrates were used as electrodes and the ion conductivity was measured by a complex impedance method and found to be 3 x 10⁻⁴S/cm which is excellent.

### Comparative Example 1

A homogeneous solution was obtained by adding 2 g of poly(vinylidene fluoride-hexafluoropropylene) manufactured by ATOFINA · JAPAN Ltd. under the trade name of KYNAR2751 to 5 g of a propylene carbonate solution of 1 mol/L of LiBF₄ and diluting the mixture with acetone, followed by heating. The resulting solution was coated over a polytetrafluoroethylene substrate by a doctor blade method and dried by heating thereby obtaining a uniform ion conductive sheet with a thickness of 100 µm.

The resulting sheet was sandwiched between a pair of ITO substrates and pressed. However, the film had a default that bubbles are formed between the two ITO substrates.

### Example 5

A homogeneous solution was obtained by heating and dissolving 2 g of poly(vinylidene fluoride-hexafluoropropylene) manufactured by ATOFINA · JAPAN Ltd. under the trade name of KYNAR2751 and 0.3 g of LiBF₄ in 8 g of triethyl phosphate. The solution was cooled to room temperature and coated over a glass substrate by a doctor blade method and heated to be dried. 50 percent by mass of the triethyl phosphate was evaporated thereby obtaining a uniform ion conductive sheet with a thickness of 40 µm. It was found that the sheet has an excellent transparency. It was also found that this sheet was easily peelable from the glass substrate and handled and confirmed that it had a tensile modulus of 3 x 10⁶N/m² and self-standing properties.

The ion conductivity of the sheet was measured by a complex impedance method and found to be 1 x 10⁻⁴S/cm which is excellent.

Furthermore, when the sheet was brought close . to flame from a cigarette lighter for 5 seconds, it was not ignited.

### Example 6

A homogeneous solution was obtained by heating and dissolving 2 g of poly(vinylidene fluoride-hexafluoropropylene) manufactured by ATOFINA · JAPAN Ltd. under the trade name of KYNAR2801 and 0.5 g of LiN(SO₂CF₃)₂ in 8 g of triethyl phosphate. The solution was cooled to room temperature and coated over a glass substrate by a doctor blade method and heated to be dried. 50 percent by mass of the triethyl phosphate was evaporated thereby obtaining a uniform ion conductive sheet with a thickness of 40 µm. It was found that the sheet has an excellent transparency. It was also found that this sheet was easily peelable from the glass substrate and handled and confirmed that it had a tensile modulus of 4 x 10⁶N/m² and self-standing properties.

The ion conductivity of the sheet was measured by a complex impedance method and found to be 2 x 10⁻⁴S/cm which is excellent.

Furthermore, when the sheet was brought close to flame from a cigarette lighter for 5 seconds, it was not ignited.

### Example 7

A homogeneous solution was obtained by heating and dissolving 2 g of poly(vinylidene fluoride-hexafluoropropylene) obtained by mixing KYNAR2751 and 2801 both manufactured by ATOFINA · JAPAN Ltd. at a mixing ratio of 1:1 and 0.5 g of LiN(SO₂CF₃)₂ in 8 g of triethyl phosphate. The solution was cooled to room temperature and coated over a glass substrate by a doctor blade method and heated to be dried. 50 percent by mass of the triethyl phosphate was evaporated thereby obtaining a uniform ion conductive sheet with a thickness of 40 µm. It was found that the sheet had an excellent transparency. It was also found that this sheet was easily peelable from the glass substrate and handled and confirmed that it had a tensile modulus of 3 x 10⁶N/m² and self-standing properties.

The ion conductivity of the sheet was measured by a complex impedance method and found to be 1.8 x 10⁻⁴S/cm which is excellent.

Furthermore, when the sheet was brought close to flame from a cigarette lighter for 5 seconds, it was not ignited.

### Example 8

A homogeneous solution was obtained by heating and dissolving 2 g of poly(vinylidene fluoride-hexafluoropropylene) manufactured by ATOFINA · JAPAN Ltd. under the trade name of KYNAR2751 and 0.3 g of LiSO₃CF₃ in 8 g of triethyl phosphate. The solution was cooled to room temperature and coated over a glass substrate by a doctor blade method and heated to be dried. 50 percent by mass of the triethyl phosphate was evaporated thereby obtaining a uniform ion conductive sheet with a thickness of 40 µm. It was found that the sheet has an excellent transparency. It was also found that this sheet was easily peelable from the glass substrate and handled and confirmed that it had a tensile modulus of 3 x 10⁶N/m² and self-standing properties.

The ion conductivity of the sheet was measured by a complex impedance method and found to be 1 x 10⁻⁴S/cm which is excellent.

Furthermore, when the sheet was brought close to flame from a cigarette lighter for 5 seconds, it was not ignited.

### Example 9

A homogeneous solution was obtained by heating and dissolving 2 g of poly(vinylidene fluoride-hexafluoropropylene) manufactured by ATOFINA · JAPAN Ltd. under the trade name of KYNAR2751 and 0.3 g of LiSO₃CF₃ in 8 g of triethyl phosphate. The solution was cooled to room temperature and coated over a glass substrate by a doctor blade method and heated to be dried. 70 percent by mass of the triethyl phosphate was evaporated thereby obtaining a uniform ion conductive sheet with a thickness of 30 µm. It was found that the sheet has an excellent transparency. It was also found that this sheet was easily peelable from the glass substrate and handled and confirmed that it had a tensile modulus of 5 x 10⁶N/m² and self-standing properties.

The ion conductivity of the sheet was measured by a complex impedance method and found to be 8 x 10⁻⁵S/cm which is excellent.

Furthermore, when the sheet was brought close to flame from a cigarette lighter for 5 seconds, it was not ignited.

### Example 10

A homogeneous solution was obtained by heating and dissolving 2 g of poly(vinylidene fluoride-hexafluoropropylene) manufactured by ATOFINA · JAPAN Ltd. under the trade name of KYNAR2751 and 0.5 g of LiN(SO₂CF₃)₂ in 8 g of triethyl phosphate. The solution was cooled to room temperature and coated over a glass substrate by a doctor blade method and heated to be dried. 40 percent by mass of the triethyl phosphate was evaporated thereby obtaining a uniform ion conductive sheet with a thickness of 60 µm. It was found that the sheet has an excellent transparency. It was also found that this sheet was easily peelable from the glass substrate and handled and confirmed that it had a tensile modulus of 1 x 10⁶N/m² and self-standing properties.

The ion conductivity of the sheet was measured by a complex impedance method and found to be 3 x 10⁻⁴S/cm which is excellent.

Furthermore, when the sheet was brought close to flame from a cigarette lighter for 5 seconds, it was not ignited.

### Example 11

A homogeneous solution was obtained by heating and dissolving 2 g of poly(vinylidene fluoride-hexafluoropropylene) manufactured by ATOFINA · JAPAN Ltd. under the trade name of KYNAR2751 and 0.3 g of LiBF₄ in a mixed solution of 8 g of triethyl phosphate and 3 g of propylene carbonate. The solution was cooled to room temperature and coated over a glass substrate by a doctor blade method and heated to be dried. 50 percent by mass of the mixed solution was evaporated thereby obtaining a uniform ion conductive sheet with a thickness of 40 µm. It was found that the sheet has an excellent transparency. It was also found that this sheet was easily peelable from the glass substrate and handled and confirmed that it had a tensile modulus of 3 x 10⁶N/m² and self-standing properties.

The ion conductivity of the sheet was measured by a complex impedance method and found to be 3 x 10⁻⁴S/cm which is excellent.

Furthermore, when the sheet was brought close to flame from a cigarette lighter for 5 seconds, it was not ignited.

## Claims

1. An ion conductive sheet comprising (a) a polymeric matrix made of at least one polymer selected from the group consisting of polyether polymers, polyvinylidene fluoride polymers, polyacrylonitrile polymers, and polyacrylate polymers and at least one ion conductive substance selected from the group consisting of (b) supporting electrolytes and solvents, (c) salts meltable at ordinary temperature, and (d) salts meltable at ordinary temperature and solvents, said sheet having self-standing properties and at least one embossed surface.

2. The ion conductive sheet according to claim 1 wherein said polymeric matrix is polyvinylidene fluoride polymer and said ion conductive substance is a supporting electrolyte and a solvent containing a phosphoric acid ester compound.

3. The ion conductive sheet according to claim 2 wherein said phosphoric acid ester compound is contained in an amount of 50 to 100 percent by mass based on the total mass of said solvent.
